# EUROPÄISCHE PATENTSCHRIFT

(11) **EP 1 152 168 B1**
(45) Veröffentlichungstag und Bekanntmachung des Hinweises auf die Patenterteilung: **05.10.2005**
(21) Anmeldenummer: 01109078.4
(22) Anmeldetag: 12.04.2001
(51) Int. Cl.: F16H 31/00, B60N 2/22, G05G 5/02

(54) **Schrittschaltwerk mit einem Klemmgesperre**
Step-by-step mechanism with locking device
Mécanisme pas à pas avec dispositif de blocage

(30) Priorität: 05.05.2000 DE 10021846
(43) Veröffentlichungstag der Anmeldung: 07.11.2001
(73) Patentinhaber: C. Rob. Hammerstein GmbH & Co.KG, 42699 Solingen (DE)
(72) Erfinder: Becker, Burckhard, 42655 Solingen (DE); Houston, Robert, 42799 Leichlingen (DE)
(74) Vertreter: Bauer, Wulf

(56) Entgegenhaltungen:
- WO-A-99/41101
- DE-A- 3 616 290
- DE-A- 4 400 910
- DE-C- 19 705 485
- US-A- 4 834 333

## Beschreibung

Die Erfindung bezieht sich auf ein Schrittschaltwerk nach dem Oberbegriff des Anspruchs 1.

Dieses aus der DE 44 00 910 A1 vorbekannte Schrittschaltwerk hat sich im praktischen Einsatz grundsätzlich bewährt. Die Verzahnung hat jeweils einen einzelnen Zahn, der bei in Mittelstellung befindlichem Handhebel außer Eingriff mit den Zahnflanken des Stellrades ist. Beim Verschwenken des Handhebels kommt jeweils einer der beiden Zähne an eine der Zahnflanken des Stellrades und dreht dieses. Als Gesperre ist ein Klemmgesperre vorgesehen, nämlich ein Klemmrollenfreilauf, hierzu wird nur beispielhaft auf die WO 9941101 hingewiesen.

Bei diesem vorbekannten Schrittschaltwerk befindet sich der Handhebel normalerweise in einer Mittelstellung, in dieser wird er durch Mittellagenarme, die durch elastische Mittel aufeinander zu gezogen werden, gehalten. Durch Drücken des Handhebels in eine Drehrichtung wird das Gesperre entsperrt und die Ausgangswelle in eine Richtung gedreht. Durch wiederholtes Drücken des Handhebels in dieselbe Drehrichtung wird der Verstellvorgang weitergeführt. Durch Schwenken des Handhebels in die andere Richtung, zumeist durch Hochziehen des Handhebels, wird eine Verstellung der Ausgangswelle in die andere Drehrichtung erhalten. Das Schrittschaltwerk ist insbesondere für den Einsatz in Verstellvorrichtungen von Fahrzeugsitzen bestimmt.

Bei dem vorbekannten Schrittschaltwerk ist der maximal pro Hub des Handhebels erzielbare Drehwinkel des Stellrades dadurch begrenzt, dass der nur eine Zahn der Verzahnung mit jeweils nur einem Zahn des Stellrades zusammenwirkt und nach einem gewissen Drehwinkel außer Eingriff kommt. Auch ist das Verhalten bei Bewegungsumkehr der Stellkräfte am Handhebel verbesserungsbedürftig.

Aus DE-36 16 290 A1 ist ein selbstarretierender Drehgelenkbeschlag vorbekannt, der mit Ausnahme einer dem Stellrad angepassten und mit dieser zusammenwirkenden Verzahnung alle sonstigen Merkmale des Oberbegriffs des Patentanspruchs 1 erfüllt, zudem auch lehrt, dass jeder Mitnehmer einen Zapfen hat.

Hier setzt nun die Erfindung ein. Sie hat es sich zur Aufgabe gemacht, ausgehend von dem Schrittschaltwerk der eingangs genannten Art dieses dahingehend zu verbessern, dass bei jedem Hub des Handhebels das Stellrad je nach dem Winkel dieses Hubs bis hin zu einer maximalen Verdrehung größer ist als es bei dem vorbekannten Schrittschaltwerk erreichbar ist.

Ausgehend von dem Schrittschaltwerk der eingangs genannten Art wird diese Aufgabe dadurch gelöst, dass jeder Mitnehmer weiterhin e) einen Zapfen hat, dass die Verzahnung als Zahnbogen mit mehreren Zähnen ausgebildet ist, und dass die Mittellagenhebel jeweils eine Führungsbucht aufweisen, die für die Aufnahme und Führung des Zapfens des zugehörigen Mitnehmers ausgebildet ist und die so angeordnet ist, dass ihre Öffnung der Öffnung der anderen Führungsbucht zugewandt ist.

Beide Mitnehmer haben mehrere, auf einem Zahnbogen angeordnete Zähne, dadurch ist innerhalb eines größeren Verschwenkungswinkels als beim Stande der Technik ein Eingriff zwischen dem Stellrad und dem als Teil eines Zahnrades anzusehenden Handhebel mit Mitnehmer möglich. Die Mitnehmer werden über ihre Zapfen durch die Mittellagenhebel gesteuert. Hierzu haben die Mittellagenhebel jeweils eine Führungsbucht, in die der Zapfen des jeweils nicht im Antriebsweg befindlichen Zahnbogens eingreift. Bei Rückführen des Handhebels in die Mittellage wird dann über die Führungsbucht der zugehörige Mitnehmer so gesteuert bewegt, das seine Zähne in die Verzahnung des Stellrades eingreifen können. Während die Mitnehmer am Handhebel angelenkt sind, sind die Mittellagenhebel am Gestell angelenkt.

Die Mittellagenhebel haben jeweils eine Anschlagflanke, die sich in Mittellage des Handhebels an einer Anschlagfläche des Gestells abstützt. Durch das zweite elastische Mittel, das vorzugsweise als Zugfeder ausgebildet ist, werden die beiden Mittellagenhebel aufeinander zu auf die jeweilige Anschlagfläche gezogen. Diese ist vorzugsweise durch einen Steg des Gestells gebildet. Da die Mittellagenhebel über ihre Führungsbuchten und die Zapfen unmittelbar auf die zugehörigen Mitnehmer wirken, hat das zweite elastische Mittel auch unmittelbare Auswirkung auf die Mitnehmer. Es bewirkt eine elastische Vorspannung der beiden Zahnbögen aufeinander zu und steht damit in Konkurrenz zu dem ersten elastischen Mittel, das die beiden Zahnbögen elastisch voneinander wegbelastet. Nun ist die Geometrie aber so eingestellt, dass die Mittellagenhebel dann mit ihrer Anschlagflanke an der zugehörigen Anschlagfläche anschlagen, wenn die beiden Zahnbögen der Mitnehmer in Eingriff mit den Zähnen des Stellrades sind. Das zweite elastische Mittel sichert also die Mittellagenposition des Handhebels und zwar indirekt über die Mitnehmer.

In einer bevorzugten Ausbildung ist das Schrittschaltwerk im wesentlichen spiegelsymmetrisch ausgeführt. Spiegelebene ist eine Ebene, die durch die Handhebelachse und die Gesperreachse verläuft. Dadurch verlaufen die mechanischen Bewegungen in beiden Antriebsrichtungen gleichartig ab.

In bevorzugter Ausführung haben die Mitnehmer um ihre Mitnehmerachsen ein Lagerspiel. Durch die beiden elastischen Mittel werden die Mitnehmer so aufeinander zu elastisch vorbelastet, dass trotz des Lagerspiels normalerweise kein Klappern auftritt.

Wenn ein Mitnehmer allerdings den Antrieb übernehmen soll, wird zunächst das Lagerspiel aufgezehrt, bevor es zum Antrieb kommt, bevor also über den Mitnehmer ein Drehmoment in das Stellrad eingeleitet wird. Auf diese Weise wird unter anderem ein Vorlauf erzielt, der bei einem Arbeitshub das erste Wegstück des Arbeitshubes bildet und an den sich dann erst die aktive Betätigung anschließt.

Demgemäss liegen in einer bevorzugten Ausführung für einen Mitnehmer dessen Mitnehmerachse und sein Eingriffbereich mindestens eines seiner Zähne auf einer Linie, die im wesentlichen quer zu den Zahnflanken des mindestens einen Zahnes verläuft. Dabei bewirken die Antriebskräfte kein Herausheben der Zähne des Zahnbogens aus den Zähnen des Stellrades, sondern ganz im Gegenteil ein positives Eingreifen der Zähne des Zahnbogens in das Stellrad.

In bevorzugter Ausbildung befinden sich die Zapfen im wesentlichen auf der Mitte zwischen der Mitnehmerachse und dem Eingriffsbereich mindestens eines Zahnes eines im Eingriff befindlichen Zahnbogens. Vorzugsweise sind die Zapfen etwas mehr zur Handhebelachse hin versetzt positioniert als zu den Mittellagenhebelachsen.

In bevorzugter Weise und ähnlich wie im aufgezeigten nächstliegenden Stand der Technik stützen sich die beiden Mitnehmer mit ihren Abstützflanken an einem Achsstummel der Handhebelachse ab. Im Abstützbereich ist vorzugsweise ein geräuschdämpfendes Mittel, insbesondere eine Gummiauflage, vorgesehen. Dadurch kann beim Rückhub des Handhebels nach einem Antrieb, wobei dieser Rückhub durch das zweite elastische Mittel angetrieben ist, der noch im Eingriff befindliche, für den zuvor erfolgten Antrieb benutzte Zahnbogen über die Zähne des Stellrades gleiten, indem der entsprechende Mitnehmer um seine Mitnehmerachse oszilliert, ohne dass jeweils ein mechanisches Geräusch beim Anschlag der Abstützflanke am Widerlager zu hören ist.

In einer bevorzugten Ausführung sind die beiden Mitnehmer auf einer Seite eines plattenförmigen Gestells angeordnet und befinden sich die Mittellagenhebel auf der anderen Seite dieses Gestells. Dabei sind im Gestell Durchlässe für die Zapfen vorgesehen, die die Zapfen unter Freilassung eines Luftspaltes umgreifen. Diese Ausbildung ermöglicht eine einfache Konstruktion, die Mitnehmer und die Mittellagenhebel bleiben in unmittelbarer Nähe zum Gestell. Dadurch benötigt man keine zweite Lagerplatte des Gestells und kann die Mittellagenhebel und die Zapfen einseitig im plattenförmigen Gestell lagern.

In einer bevorzugten Ausbildung sind bei in Mittelstellung befindlichem Handhebel beide Zahnbögen in Eingriff mit dem Stellrad. Dies bewirkt eine mechanische Sperrung der Bewegung des Stellrades.

Es soll angemerkt werden, dass das Zusammenwirken der Mitnehmer und der Mittellagenhebel auch in anderer Weise als beschrieben, insbesondere in kinematischer Umkehrung, ausgeführt sein kann. So können die Zapfen an den Mittellagenhebel vorgesehen sein, während die Aufnahmebucht jeweils am Mitnehmer ausgebildet ist.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im folgenden näher erläutert wird. In dieser zeigen:
- Fig. 1:: eine Draufsicht auf das Schrittschaltwerk,
- Fig. 2:: eine perspektivische Schrägansicht des Schrittschaltwerks,
- Fig. 3:: eine Untersicht des Schrittschaltwerks bei entnommenem, plattenförmigen Gestell und
- Fig. 4:: eine Seitenansicht des Schrittschaltwerks.

Wie aus den Figuren ersichtlich ist, hat das Schrittschaltwerk ein plattenförmiges Gestell 20. An diesem ist ein Handhebel 22 um eine Handhebelachse 24 schwenkbar gelagert. Er kann, ausgehend von der in den Figuren jeweils gezeigten Mittellagenposition, in beide Richtungen im Sinne des Doppelpfeils verschwenkt werden.

Am Gestell 20 ist weiterhin ein Gesperre 26 angeordnet, das hier als Rollkörperklemmgesperre ausgeführt ist. Es hat eine Ausgangswelle, die um eine Gesperreachse 28 drehbar ist und weiterhin ein Stellrad 30.

Am Handhebel 22 sind zwei Mitnehmer 32 um eine Mitnehmerachse 33 schwenkbar angelenkt. Sie haben eine dem Stellrad 30 angepasste und mit dieser zusammenwirkende Verzahnung in Form eines Zahnbogens 34 mit gezeigten Ausführungsbeispiele sechs Zähnen. Von diesen ist jeweils der innerste, einer Symmetrieebene 36 nächste Zahn im Eingriff mit Zähnen des Stellrades 30. Symmetrieebene 36 ist dadurch definiert, dass sie durch die Handhebelachse 24 und die Gesperreachse 28 hindurchläuft.

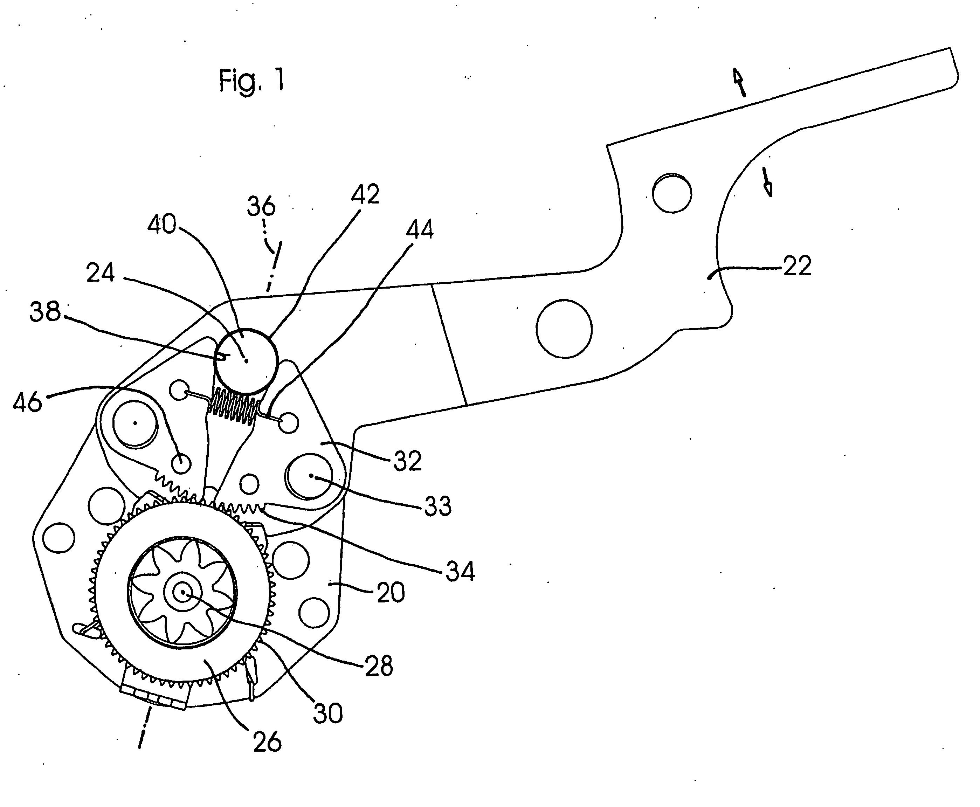

Die Mitnehmer 32 haben weiterhin eine Abstützflanke 38, mit der sie normalerweise an einem Widerlager anliegen, das durch einen Achsstummel 40 der Handhebelachse 24 gebildet wird. Die Anlage ist beispielsweise aus Figur 1 ersichtlich. Dabei ist um den Achsstummel 40 ein O-Ring 42 aus Gummi in eine Nut des Achsstummels 40 gelegt, an ihr liegen die Abstützflanken 38 an, wie aus Figur 1 ersichtlich ist.

Die beiden baugleichen, aber spiegelbildlich angeordneten Mitnehmer 32 werden durch ein erstes elastisches Mittel 44, das hier als Zugfeder ausgebildet ist, so gegeneinander vorbelastet, dass die Abstützflanken 38 am O-Ring 42 des Achsstummels 40 anliegen.

Wie insbesondere aus Figur 1 ersichtlich ist, haben die Mitnehmer 32 ein Lagerspiel um ihre Mitnehmerachsen. In Figur 1 sind deutlich mondsichelförmige Luftspalte zu erkennen.

Von den Mitnehmern 32 springen quer Zapfen 46 weg, die durch ausreichend große Durchlässe des Gestells hindurchgreifen. Auf diese Zapfen wird noch näher eingegangen.

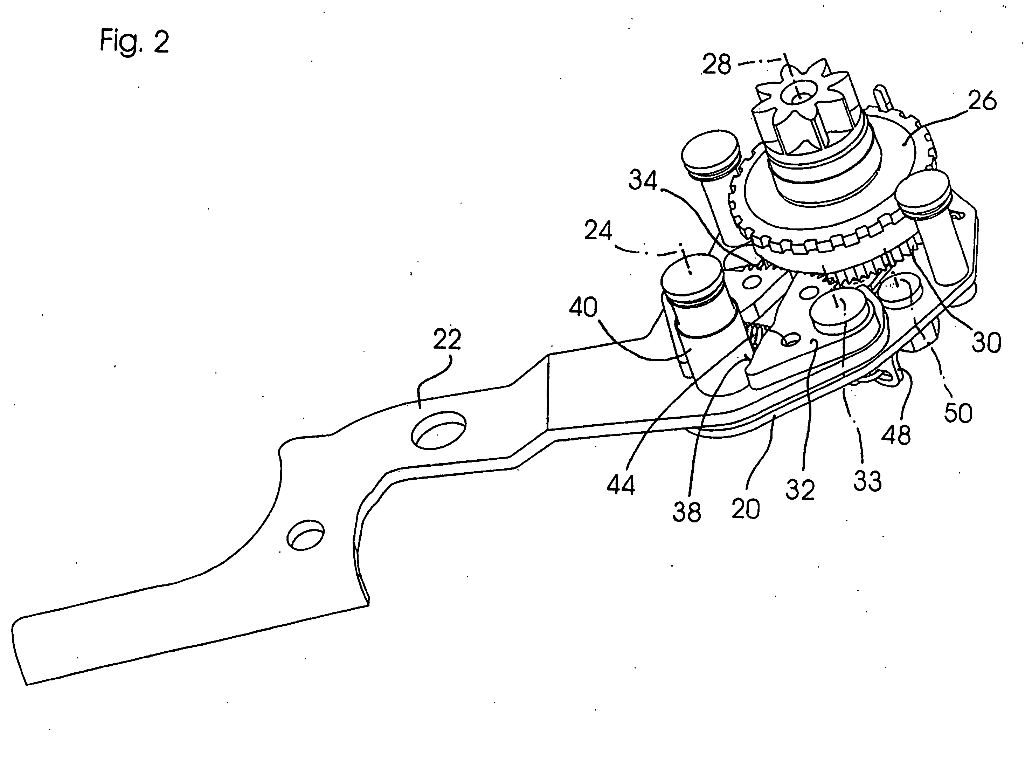

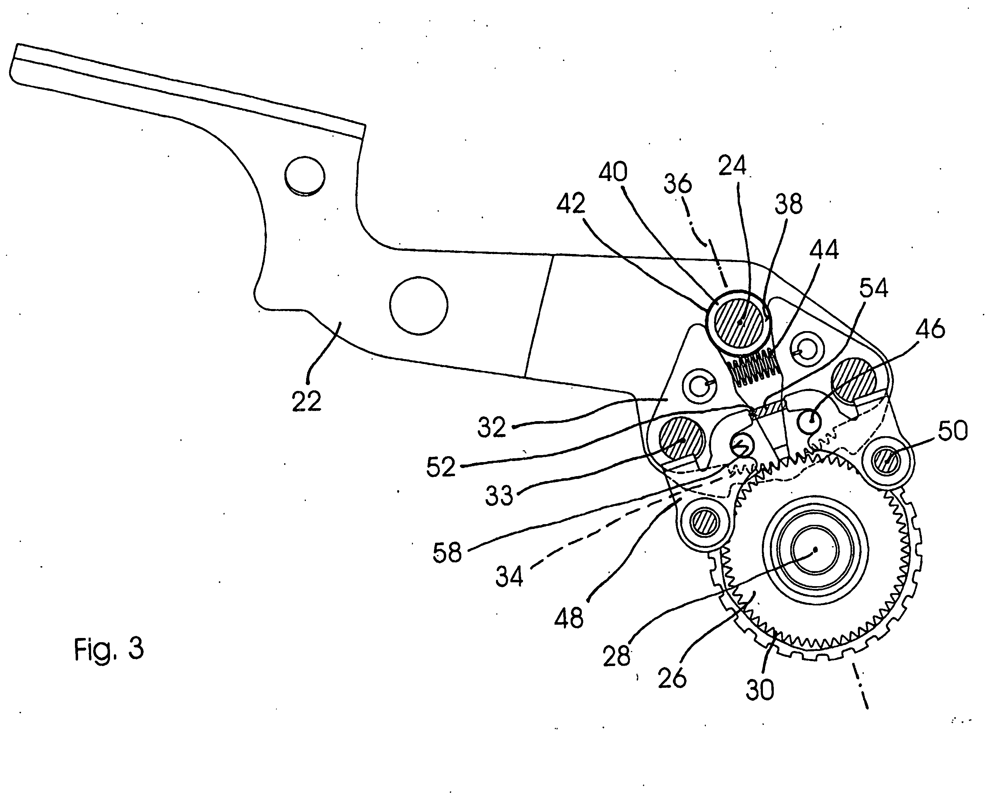

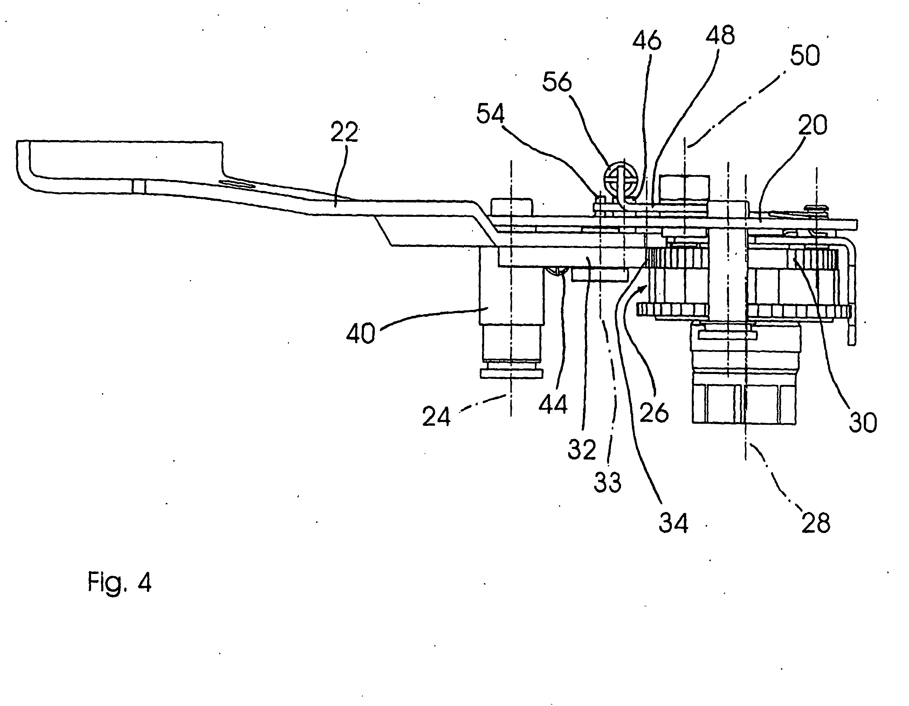

Auf der anderen Seite des Gestells 20 sind spiegelsymmetrisch zwei Mittellagenhebel 48 um Mittellagenhebelachsen 50 am Gestell 20 schwenkbar gelagert. Dabei ist jedem Mitnehmer 32 ein Mittellagenhebel 48 zugeordnet. Die Mittellagenhebel 48 haben jeweils eine Anschlagflanke 52, der jeweils eine Anschlagfläche des Gestells 20 zugeordnet ist. Die Anschlagflächen werden dabei von Schmalflächen eines Stegs 54 gebildet, der aus dem Blechmaterial des Handhebels 22 gebildet ist und nach oben hochgebogen ist. Die beiden Mittellagenhebel 48 sind durch ein zweites elastisches Mittel 56, das wiederum als Schraubenzugfeder ausgeführt ist, elastisch aufeinander zubelastet, so dass ihre Anschlagflanken 52 am Steg 54 anliegen, wie dies in den Figuren gezeigt ist. In Figur 3 ist das zweite elastische Mittel 56 zur Vereinfachung der Darstellung nicht eingezeichnet, es ist aber aus Figur 2 und Figur 4 ersichtlich.

Jeder Mittellagenhebel 48 hat eine Führungsbucht 58, die im wesentlichen halbrund ist und jeweils zur Führungsbucht 58 des anderen Mittellagenhebels 48 hin offen ist. Die Führungsbucht 58 ist dem Zapfen 46, der aus Rundmaterial gefertigt ist, angepasst, wie dies insbesondere Figur 3 zeigt.

Die Mittellagenhebelachsen 50 sind in der Nähe der Zähne des Stellrades 30 angeordnet. Eine die beiden Mittellagenhebelachsen 50 verbindende Gerade schneidet eine Radiale des Stellrades 30, die in einem Eingriffsbereich eines Zahnes eines Mitnehmers 32 endet. Der Schnittpunkt liegt dabei dem Eingriffsbereich näher als dem Zentrum des Stellrades 30. Die Verhältnisse liegen etwa bei 1 zu 2.

Wie insbesondere aus Figur 3 zu erkennen ist, ist die Wirkung der beiden elastischen Mittel 44 und 56 gegenläufig. Während das erste elastische Mittel 44 die Zahnbögen 34 der beiden Mitnehmer 32 elastisch voneinander wegbelastet, bewirkt das zweite elastische Mittel 56 genau das Gegenteil. Das zweite elastische Mittel 56 wird in seiner Funktion allerdings begrenzt durch den Anschlag der Anschlagflanken 52 am Steg 54 und kommt insbesondere dann zur Wirkung, wenn der Handhebel 22 aus seiner Mittellage herausgeschwenkt wird.

Im gezeigten Ausführungsbeispiel ist das Schrittschaltwerk im wesentlichen aus flachen, aus Blechstanzteilen erstellten Bauteilen aufgebaut. Wie beispielsweise Figur 4 zeigt, ergibt sich folgende Schichtfolge: In Figur 4 liegen die beiden Mittellagenhebel 48 oben, sie sind auf der Oberseite des unter ihnen befindlichen, plattenförmigen Gestells 20 angeordnet. Direkt unter dem plattenförmigen Gestell 20 befindet sich der Handhebel 22. Der Steg 54 des Handhebels 22 ragt durch ein Fenster des Gestells 20, so dass er mit den Anschlagflanken 52 der beiden Mittellagenhebel 48 zusammenwirken kann. Dabei bilden die Ränder des Fensters zugleich Anschlagflächen für den Steg 54, auf diese Weise wird in beiden Bewegungsrichtungen des Handhebels 22 der maximale Schwenkwinkel des Handhebels 22 begrenzt. Unterhalb des Handhebels 22 befinden sich die an diesem angelegten beiden Mitnehmer 32.

Im folgenden wird nun die Funktion erläutert: Wird der Handhebel 22 ausgehend von der in Figur 1 gezeigten Mittellage nach unten geschwenkt, also im Sinne des Uhrzeigers gedreht, wird zunächst der Luftspalt im Lagerbereich des rechten Mitnehmers aufgezehrt. Der linke Mitnehmer hat in der betrachteten Bewegung kein wirksames Lagerspiel und wird direkt aus dem Eingriff in die Verzahnung des Stellrades 30 ausgeschwenkt. Dadurch behindert er die nun einsetzende Antriebsbewegung durch den rechten Mitnehmer 32 nicht mehr. In Weiterführung der Antriebsbewegung durch den Handhebel 22 erfolgt dann ein Drehen des Stellrades 30 in Gegenrichtung zum Uhrzeigersinn und damit ein Antrieb der Ausgangswelle des Gesperres 26. Dabei kommen nacheinander die Zähne des Zahnbogens des rechten Mitnehmers 32 in Eingriff mit den Zähnen des Stellrades 30.

Der Antrieb des Handhebels 22 im Uhrzeigersinn kann bis zum Anschlag des Stegs 54 am Fenster des Gestells 20 durchgeführt werden, er kann aber auch an beliebiger Position vor diesem Anschlag beendet werden. Es können also beliebige Einstellvorgänge mit dem Schrittschaltwerk durchgeführt werden.

Während des Beginns des Antriebsvorgangs bewegt sich der Zapfen 46 des rechten, antreibenden Mitnehmers 32 aus der Führungsbucht 58 des zugehörigen, rechten Mittellagenhebels 48 heraus. Der am Gestell 20 angelenkte Mittellagenhebel kann der Bewegung des Zapfens 46 nicht folgen, weil seine Anschlagfläche 52 bereits am Steg 54 anliegt. Der linke Mittellagenhebel wird dagegen ausgeschwenkt. Der linke Mitnehmer 32, der aufgrund seiner Lagerung am Handhebel 22 in Figur 1 nach links oben weggezogen wird, nimmt über seinen Zapfen 46 den linken Mittellagenhebel 48 nach außen mit, der Zapfen 46 drückt gegen die Wirkung des zweiten elastischen Mittels 56 den linken Mittellagenhebel 48 nach links oben hin. Dabei wird das zweite elastische Mittel 56 gespannt.

Sobald in den Handhebel 22 keine Kraft mehr eingeleitet wird, setzt der Rückhub des Handhebels 22 ein. Dies erfolgt unter der Wirkung des gespannten zweiten elastischen Mittels 56. Der Handhebel 22 wird dadurch selbsttätig wieder in die Mittellagenstellung zurückbewegt. Dabei rutscht nun der rechte Mitnehmer mit seinen Zähnen über die Verzahnung des Stellrades 30. Da sein Zapfen 46 außerhalb der Führungsbucht 58 des rechten Mittellagenhebels 48 ist, steht der rechte Mitnehmer nur unter der Wirkung des ersten elastischen Mittels 44. Bei Rückhub macht er kleine Nickbewegungen um seine Lagerung, seine Abstützflanke 38 entfernt sich dabei mehrmals vom O-Ring 42 und stößt wieder an diesen an.

Der linke Mitnehmer 32 wird unter der Wirkung des zweiten elastischen Mittels 56 wieder in Eingriff mit den Zähnen des Stellrades 30 gebracht, dieser Eingriff geschieht erst im letzten Moment, kurz vor Erreichen der Mittellage des Handhebels 22 und Abschalten der Federkraft. Abschließend ist dann wieder die in Figur 1 gezeigte Stellung erreicht. Es ist jedoch das Stellrad 30 nunmehr in einer anderen Drehposition.

Die direkte Verbindung der beiden Mittellagenhebel 48 über ein einziges elastisches Mittel 56 kann ersetzt werden durch zwei einzelne elastische Mittel, wobei jeweils ein einzelnes für jeden einzelnen Mittellagenhebel 48 vorgesehen ist. Gleiches gilt für das erste elastische Mittel 44. Die gezeigte Ausführung spart jedoch Bauteile.

Entscheidend für das Schrittschaltwerk ist, dass der jeweils im Antrieb befindliche Mitnehmer 32 frei von der Wirkung seines Mittellagenhebels 48 ist, so dass er ohne Belastung durch das zweite elastische Mittel 56 während des Rückhubs über die Zähne des Stellrades 30 rutschen kann. Die Zähne seines Zahnbogens 34 und die entsprechenden Zähne des Stellrades 30 sind so ausgeführt, dass ein Rückrutschen über die Verzahnung ermöglicht ist.

Das zweite elastische Mittel 56 bewirkt ein wesentlich höheres und zudem gegenläufiges Drehmoment auf die Mitnehmer 32 als das erste elastische Mittel 44, jeweils bei gleicher Auslenkung der Mitnehmer 32. Erfindungsgemäß wird, wie oben beschrieben, der jeweils im Antrieb befindliche Mitnehmer 32 von der Wirkung des zweiten elastischen Mittels 56 freigegeben.

Die Mittellagenhebel 48 kommen unter der Wirkung des zweiten elastischen Mittels 56 genau an den Steg 54, wenn die Zahnbögen 34 in Eingriff mit dem Stellrad 30 sind, wobei der Eingriff gemäß Figur 1 gemeint ist.

## Patentansprüche

1. Schrittschaltwerk, insbesondere für Verstelleinrichtung von Fahrzeugsitzen,
- mit einem Gestell (20),
- mit einem Handhebel (22), der um eine Handhebelachse (24) schwenkbar am Gestell (20) gelagert ist,
- mit einem Gesperre (26), das ein verzahntes Stellrad (30) und eine im Gestell (20) um eine Gesperreachse (28) drehbare Ausgangswelle hat, es ist vorzugsweise als Klemmgesperre ausgeführt,
- mit einem Paar von Mitnehmern (32), die a) jeweils um eine Mitnehmerachse schwenkbar am Handhebel (22) angelenkt sind, b) eine dem Stellrad (30) angepasste und mit dieser zusammenwirkende Verzahnung haben, c) eine Abstützflanke (38) aufweisen, der ein Widerlager des Gestells (20) benachbart ist und d) ein erstes elastisches Mittel (44) aufweisen, das die beiden Abstützflanken (38) elastisch in Anlage an das Widerlager (Achsstummel 40) vorbelastet,
wobei am Gestell (20) zwei Mittellagenhebel (48) jeweils um eine Mittellagenhebelachse (50) schwenkbar gelagert sind, wobei jedem Mitnehmer (32) ein Mittellagenhebel (48) zugeordnet ist, wobei die Mittellagenhebel (48) eine Anschlagflanke (52) haben, der jeweils eine Anschlagfläche (54) des Handhebels (22) benachbart und zugeordnet ist, und wobei den beiden Mittellagenhebeln ein zweites elastisches Mittel (56) zugeordnet ist, das die Anschlagflanke (52) elastisch gegen die jeweilige Anschlagfläche vorbelastet,
**dadurch gekennzeichnet, dass** die Verzahnung als Zahnbogen (34) mit mehreren Zähnen ausgebildet ist, und dass jeder Mitnehmer (32) weiterhin e) einen Zapfen (46) hat, und die Mittellagenhebel (48) jeweils eine Führungsbucht (58) aufweisen, die für die Aufnahme und Führung des Zapfens (46) des zugehörigen Mitnehmers (32) ausgebildet ist und die so angeordnet ist, dass ihre Öffnung der Öffnung der anderen Führungsbucht (58) zugewandt ist.

2. Schrittschaltwerk nach Anspruch 1, **dadurch gekennzeichnet, dass** die beiden Mitnehmer (32) und die beiden Mittellagenhebel (48) spiegelbildlich zu einer durch die Handhebelachse (24) und die Gesperreachse (28) verlaufenden Symmetrieebene (36) angeordnet sind.

3. Schrittschaltwerk nach Anspruch 1, **dadurch gekennzeichnet, dass** für einen Mitnehmer (32) eine Linie durch seine Mitnehmerachse (33) und durch den Eingriffsbereich mindestens eines Zahns seines im Eingriff befindlichen Zahnbogens (34) im wesentlichen quer zu den Zahnflanken dieses mindestens einen Zahns verläuft.

4. Schrittschaltwerk nach Anspruch 1, **dadurch gekennzeichnet, dass** die Zapfen (46) im wesentlichen auf der Mitte zwischen der Mitnehmerachse und dem Eingriffsbereich mindestens eines Zahnes eines im Eingriff befindlichen Zahnbogens (34) angeordnet sind und dass sie etwas zur Handhebelachse (24) hin versetzt positioniert sind.

5. Schrittschaltwerk nach Anspruch 1, **dadurch gekennzeichnet, dass** das Widerlager durch einen Achsstummel (40) der Handhebelachse (24) gebildet ist und ein geräuschdämpfendes Mittel, insbesondere eine Gummiauflage (O-Ring 42), aufweist.

6. Schrittschaltwerk nach Anspruch 1, **dadurch gekennzeichnet, dass** die beiden Zahnbögen (34) jeweils mindestens 5 und vorzugsweise 6 bis 8 Zähne aufweisen und das Zentrum ihres Bogenverlaufs auf der Handhebelachse (24) liegt.

7. Schrittschaltwerk nach Anspruch 1, **dadurch gekennzeichnet, dass** die beiden Mitnehmer (32) auf einer Seite des plattenförmigen Gestells (20) und die Mittellagenhebel (48) auf der anderen Seite des Gestells (20) angeordnet sind und dass im Gestell (20) Durchlässe für die Zapfen (46) vorgesehen sind, die den Zapfen (46) und Freilassung eines Luftspaltes umgreifen.

8. Schrittschaltwerk nach Anspruch 1, **dadurch gekennzeichnet, dass** eine durch die beiden Mittellagenhebelachsen (50) verlaufende Ebene durch das Stellrad (30) hindurchläuft und dem Eingriffsbereich mindestens eines Zahnes eines im Eingriff befindlichen Zahnbogens (34) näher ist als der Gesperreachse (28), vorzugsweise eine Strecke zwischen Eingriffsbereich und Gesperreachse (28) im Verhältnis 10 % zu 90 % bis 40 % zu 60 % aufteilt.

9. Schrittschaltwerk nach Anspruch 1, **dadurch gekennzeichnet, dass** sich die beiden Mittellagenhebelachsen (50) außerhalb des Stellrades (30), aber in Nähe dieses Stellrades (30) befinden, wobei der Abstand der beiden Mittellagenhebelachsen (50) von der Gesperreachse (28) vorzugsweise 10 bis 50 %, insbesondere etwa 25 % größer ist als der Außenradius des Stellrades (30).

10. Schrittschaltwerk nach Anspruch 1, **dadurch gekennzeichnet, dass** in einer Mittelstellung des Handhebels (22) beide Zahnbögen in Eingriff mit dem Stellrad (30) sind.

## Claims

1. Step-by-step ratchet mechanism, more specifically intended for use in devices for adjusting vehicle seats,
- with a mount (20),
- with a hand lever (22) that is carried on the mount (20) in such a manner that it is pivotal about an axis (24) of the hand lever,
- with a ratchet (26) that is provided with a toothed set wheel (30) and with an output shaft that is rotatable about an axis (28) of the ratchet in the mount (20), said ratchet being preferably designed as a silent ratchet,
- with a pair of catches (32) that a) are each hinged on the hand lever (22) so as to be pivotal about an axis of the catch, b) are provided with a gear cutting that matches the set wheel (30) and cooperates with it, c) are provided with a supporting flank (38) that neighbors an abutment of the mount (20) and d) are provided with a first elastic means (44) that resiliently pretensions the two supporting flanks (38) adjacent the abutment (axle stub 40),
whereby two mean position levers (48) are carried on the mount (20) in such a way that they are pivotal each about an axis (50) of the mean position levers, one mean position lever (48) being assigned to each catch (32), the mean position levers (48) are provided with a stop flank (52), a stop area (54) of the hand lever (22) being assigned and adjacent to each of said stop flanks, a second elastic means (56) is allocated to the two mean position levers, said elastic means resiliently pretensioning the stop flank (52) against each stop area,
**characterized in that** the gear cutting is designed as a toothed quadrant (34) with several teeth, that each catch (32) is provided with e) a pin (46), and **in that** the mean position levers (48) are provided each with a guide bight (58) which is designed for receiving and guiding the pin (46) of the corresponding catch (32) and is arranged in such a manner that its aperture faces the aperture of the other guide bight (58).

2. Step-by-step ratchet mechanism according to claim 1, wherein the two catches (32) and the two mean position levers (48) are arranged mirror-inverted about a plane of symmetry (36) going through the axis (24) of the hand lever and the axis (28) of the ratchet.

3. Step-by-step ratchet mechanism according to claim 1, wherein for a catch (32), a line goes through the axis (33) of the catch and through the area of meshing of at least one of the teeth of its engaged toothed quadrant (34) and substantially runs across the faces of said at least one tooth.

4. Step-by-step ratchet mechanism according to claim 1, wherein the pins (46) are substantially located in the center between the axis of the catch and the area of meshing of at least one tooth of an engaged toothed quadrant (34) and wherein the pins are positioned in such a manner that they are slightly displaced toward the axis (24) of the hand lever.

5. Step-by-step ratchet mechanism according to claim 1, wherein the abutment is formed by an axle stub (40) of the axis (24) of the hand lever and is provided with a silencing means, more specifically with a rubber coat (O-ring 42).

6. Step-by-step ratchet mechanism according to claim 1, wherein the two toothed quadrants (34) are provided with at least 5 and preferably 6 to 8 teeth each and wherein the center of the curve they describe lies on the axis (24) of the hand lever.

7. Step-by-step ratchet mechanism according to claim 1, wherein the two catches (32) are arranged on one side of a plate-shaped mount (20) and the mean position levers (48) are positioned on the other side of said mount (20) and wherein passages are provided for the pins (46) in the mount (20), said passages surrounding the pins (46) with a clearance.

8. Step-by-step ratchet mechanism according to claim 1, wherein a plane running through the two axes (50) of the mean position levers goes through the set wheel (30) and is closer to the area of meshing of at least one tooth of an engaged toothed quadrant (34) than to the axis (28) of the ratchet, preferably dividing a distance between the area of meshing and the axis (28) of the ratchet in a relationship of 10% to 90% up to 40% to 60%.

9. Step-by-step ratchet mechanism according to claim 1, wherein the two axes (50) of the mean position levers are located outside the set wheel (30) but in the neighborhood of said set wheel (30), the distance between the two axes (50) of the mean position levers and the axis (28) of the ratchet being preferably 10 to 50%, more specifically approximately 25%, larger than the outer radius of the set wheel (30).

10. Step-by-step ratchet mechanism according to claim 1, wherein, in a neutral position of the hand lever (22), the toothed quadrants are both meshing with the set wheel (30).

## Revendications

1. Mécanisme d'avancement graduel, en particulier pour des dispositifs de réglage de sièges de véhicules,
- avec une monture (20)
- avec un levier à main (22) qui est logé sur ladite monture (20) de manière à pouvoir pivoter autour d'un axe (24) du levier à main,
- avec un dispositif d'encliquetage (26) qui présente une roue dentée de réglage (30) et un arbre de sortie tournant autour d'un axe (28) du dispositif d'encliquetage dans la monture (20), ledit dispositif d'encliquetage étant réalisé de préférence comme dispositif d'encliquetage par serrage,
- avec une paire d'entraîneurs (32) qui a) sont articulés respectivement sur le levier à main (22) de manière à pouvoir pivoter autour d'un axe d'entraîneur, b) présentent une denture qui est adaptée à la roue de réglage (30) et agit de concert avec celle-ci, c) présentent un flanc d'appui (38) qui est voisin d'une butée de la monture (20), et qui d) présentent un premier moyen élastique (44) qui précontraint les deux flancs d'appui (38) d'une manière élastique en appui contre la butée (tronçon d'axe 40), deux leviers de position moyenne (48) etant disposés sur la monture (20) de manière à pouvoir pivoter respectivement autour d'un axe (50) de levier de position moyenne, à chaque entraîneur (32) étant associé un levier de position moyenne (48), les leviers de position moyenne (48) présentent un flanc d'arrêt (52), une surface d'arrêt (54) du levier à main (22) étant voisine de et associée à chacun desdits flancs d'arrêt, un deuxième moyen élastique (56) est associé aux deux leviers de position moyenne, qui précontraint le flanc d'arrêt (52) d'une manière élastique contre la surface d'arrêt respective,
**caractérisé par le fait que** la denture est réalisée comme secteur denté (34) avec plusieurs dents, que chaque entraîneur (32) présente en outre e) un tenon (46), et que les leviers de position moyenne (48) présentent respectivement une baie de guidage (58) qui est réalisée pour recevoir et pour guider le tenon (46) de l'entraîneur (32) associé et qui est disposée de telle façon que son ouverture montre vers l'ouverture de l'autre baie de guidage (58).

2. Mécanisme d'avancement graduel selon la revendication 1, **caractérisé par le fait que** les deux entraîneurs (32) et les deux leviers de position moyenne (48) sont disposés de manière reflétée par rapport à un plan de symétrie (36) s'étendant à travers l'axe (24) du levier à main et l'axe (28) du dispositif d'encliquetage.

3. Mécanisme d'avancement graduel selon la revendication 1, **caractérisé par le fait que**, pour un entraîneur (32), une ligne qui s'étend à travers son axe d'entraîneur (33) et à travers la zone d'engrènement d'au moins une dent de son secteur denté (34) se trouvant en prise s'étend pour l'essentiel transversalement aux flancs de dent d'au moins la dent précitée.

4. Mécanisme d'avancement graduel selon la revendication 1, **caractérisé par le fait que** les tenons (46) sont disposés pour l'essentiel au milieu entre l'axe d'entraîneur et la zone d'engrènement d'au moins une dent d'un secteur denté (34) en prise, et qu'ils sont positionnés de manière à être décalés un peu vers l'axe (24) du levier à main.

5. Mécanisme d'avancement graduel selon la revendication 1, **caractérisé par le fait que** la butée est formée par un tronçon d'axe (40) de l'axe (24) du levier à main et qu'elle présente un moyen amortissant le bruit, en particulier une couche en caoutchouc (O-ring 42).

6. Mécanisme d'avancement graduel selon la revendication 1, **caractérisé par le fait que** les deux secteurs dentés (34) présentent respectivement 5 dents du moins et de préférence entre 6 et 8 dents, et que le centre de leur arc est situé sur l'axe (24) du levier à main.

7. Mécanisme d'avancement graduel selon la revendication 1, **caractérisé par le fait que** les deux entraîneurs (32) sont disposés d'un côté de la monture (20) en forme de plaque et que les leviers de position moyenne (48) sont disposés de l'autre côté de la monture (20), et que des passages pour les tenons (46) sont prévus dans la monture (20), qui embrassent le tenon (46) avec un jeu.

8. Mécanisme d'avancement graduel selon la revendication 1, **caractérisé par le fait qu'**un plan s'étendant à travers les deux axes (50) des leviers de position moyenne s'étend à travers la roue de réglage (30) et est situé plus près de la zone d'engrènement d'au moins une dent d'un secteur denté (34) en prise que de l'axe (28) du dispositif d'encliquetage, de préférence il divise une distance entre la zone d'engrènement et l'axe (28) du dispositif d'encliquetage dans le rapport compris entre 10 % à 90 % et 40 % à 60 %.

9. Mécanisme d'avancement graduel selon la revendication 1, **caractérisé par le fait que** les deux axes (50) des leviers de position moyenne se trouvent à l'extérieur de la roue de réglage (30), mais à proximité de cette roue de réglage (30), la distance entre les deux axes (50) des leviers de position moyenne et l'axe (28) du dispositif d'encliquetage étant de préférence plus grande de 10 à 50 %, en particulier de 25 % à peu près, que le rayon extérieur de la roue de réglage (30).

10. Mécanisme d'avancement graduel selon la revendication 1, **caractérisé par le fait que**, dans une position moyenne du levier à main (22), les deux secteurs dentés sont en prise avec la roue de réglage (30).
